# EUROPEAN PATENT APPLICATION

(11) **EP 3 045 590 A1**
(43) Date of publication of application: **20.07.2016**
(21) Application number: 13893535.8
(22) Date of filing: 13.09.2013
(51) Int. Cl.: E02F 9/22, F16K 11/07, E02F 3/42

(54) **CONSTRUCTION MACHINE FLOAT VALVE**

(71) Applicant: Volvo Construction Equipment AB, 631 85 Eskilstuna (SE)
(72) Inventor: KANG, Min-Heuk, Changwon-si Gyeongsangnam-do 642-765 (KR)
(74) Representative: Zimmermann, Tankred Klaus
(86) International application number: PCT/KR2013/008289
(87) International publication number: WO 2015/037760

(57) **Abstract**

A construction machine float valve is disclosed, which can remove a spool stick phenomenon that may occur during leveling and flattening work. The float valve includes a valve block including first and second actuator ports formed therein to respectively communicate with a large chamber and a small chamber of a hydraulic cylinder of a working device and a tank port formed therein to selectively communicate with the first and second actuator ports, a holding poppet installed in a path that connects the first actuator port to the second actuator port and the tank port to be opened or closed, a spool installed in the valve block to be shifted to open the path through sifting the holding poppet to a holding function releasing position, a boom-up signal pressure port configured to receive boom-up pilot pressure applied thereto to make the spool return to a neutral position if the spool does not return to the neutral position when the boom-down pilot pressure is released, a piston configured to make the spool return to the neutral position through pressing the spool by means of the boom-up pilot pressure that is applied to the boom-up signal pressure port, and a drain port configured to drain the hydraulic fluid from a pressure chamber if the piston is pressed by the boom-up pilot pressure or if the spool is shifted by the boom-down pilot pressure.

## Description

### TECHNICAL FIELD

The present invention relates to a construction machine float valve, and more particularly, to a float valve for a construction machine, which can remove a spool stick phenomenon that a boom-down operation is continuously performed even if an operation lever (RCV) is operated to be in a neutral position while leveling and flattening work is performed through a floating function.

### BACKGROUND OF THE INVENTION

Generally, in the case of performing leveling and flattening work using an excavator, in a state where supply of hydraulic fluid from a hydraulic pump to a boom cylinder is intercepted during a boom-down operation, flow paths on a large chamber side and a small chamber side of the boom cylinder communicate with each other through a float valve, and the hydraulic fluid of the boom cylinder returns to a hydraulic fluid tank, so that a boom may descend by its own weight.

In this case, if an arm is operated (arm-in or arm-out operation), a bucket moves in upward and downward directions in accordance with uneven ground surfaces, and thus the leveling and flattening work can be easily performed. Further, the hydraulic fluid that is supplied from the hydraulic pump to the boom cylinder can be used to operate another working device, and thus energy can be saved.

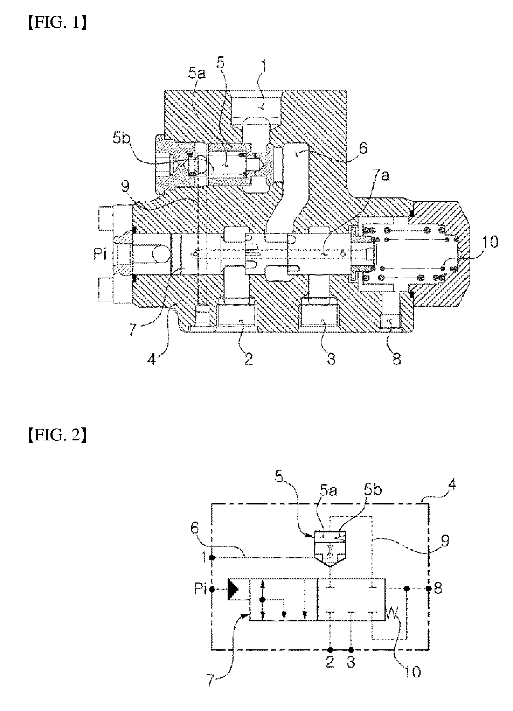

Figs. 1 and 2 are a view of a float valve for a construction machine in the related art and a hydraulic circuit diagram thereof.

As illustrated in Figs. 1 and 2, a float valve for a construction machine in the related art includes a valve block 4 including a first actuator port 1 formed therein to communicate with a large chamber of a hydraulic cylinder (i.e., boom cylinder) of a working device, a second actuator port 2 formed therein to communicate with a small chamber of the hydraulic cylinder of the working device, and a tank port 3 formed therein to selectively communicate with the first actuator port 1 and the second actuator port 2; a holding poppet 5 installed in a path 6 that connects the first actuator port 1 to the second actuator port 2 and the tank port 3 to be opened or closed; a spool 7 installed in the valve block 4 and shifted in response to boom-down pilot pressure Pi applied thereto to open the path 6 through sifting the holding poppet 5 to a holding function releasing position and to connect the first actuator port 1 to the second actuator port 2 and the tank port 3 when the path 6 is opened; and a drain flow path 9 configured to drain hydraulic fluid in a back chamber 5a of the holding poppet 5 to a drain port 8 through a hollow hole 7a of the spool 7 in order to release a holding function of the holding poppet 5 when the spool 7 is shifted by the boom-down pilot pressure Pi.

If the spool 7 is shifted in a rightward direction as shown in the drawing (in this case, a valve spring 10 is compressed) by the boom-down pilot pressure Pi that is applied during a boom-down operation, the hydraulic fluid in the back chamber 5a of the holding poppet 5 passes through the drain flow path 9 and the hollow hole 7a of the spool 7 in order, and then drains to the drain port 8. In this case, the holding poppet 5 is shifted to the holding function releasing position to open the path 6.

Through this, the first actuator port 1 that communicates with the large chamber of the hydraulic cylinder can be connected to the second actuator port 2 that communicates with the small chamber of the hydraulic cylinder and the tank port 3. That is, since the large chamber and the small chamber of the hydraulic cylinder and a hydraulic fluid tank are made to communicate with one another by the float valve, it becomes possible to perform leveling and flattening work using the floating function.

Even in the case where an operation lever (RCV) is operated to be in a neutral position to release the boom-down pilot pressure Pi that is applied to the spool 7 while the leveling and flattening work is done using the float valve as described above, a spool stick phenomenon that the spool 7 does not return to the neutral position may occur due to an insufficient spool gap or foreign substances.

If the spool stick phenomenon occurs in the spool 7, the holding poppet 5 does not return to a position in which the holding poppet 5 intercepts the path 6 through an elastic restoring force of a valve spring 5b. Due to this, the hydraulic fluid that is supplied from the large chamber of the hydraulic cylinder flows into the first actuator port 1, and then drains toward the second actuator port 2 and the tank port 3 through the path 6. Accordingly, a jack-up phenomenon of the working device may occur due to the free-fall phenomenon of the boom.

### SUMMARY OF THE INVENTION

Accordingly, the present invention has been made to solve the aforementioned problems occurring in the related art, and it is an object of the present invention to provide a float valve for a construction machine, which can return a spool to a neutral position through boom-up pilot pressure in the case where a boom-down operation is continuously performed due to a spool stick phenomenon while leveling and flattening work is performed through a floating function.

### TECHNICAL SOLUTION

To achieve the above and other objects, in accordance with an embodiment of the present invention, there is provided a float valve for a construction machine, which includes a valve block including a first actuator port formed therein to communicate with a large chamber of a hydraulic cylinder of a working device, a second actuator port formed therein to communicate with a small chamber of the hydraulic cylinder of the working device, and a tank port formed therein to selectively communicate with the first actuator port and the second actuator port; a holding poppet installed in a path that connects the first actuator port to the second actuator port and the tank port to be opened or closed; a spool installed in the valve block to be shifted in response to boom-down pilot pressure applied thereto, the spool being shifted to open the path through sifting the holding poppet to a holding function releasing position as hydraulic fluid drains from a back chamber of the holding poppet, and to make the first actuator port communicate with the second actuator port and the tank port when the path is opened; a boom-up signal pressure port configured to receive boom-up pilot pressure applied thereto to make the spool return to a neutral position if the spool does not return to the neutral position when the boom-down pilot pressure is released; a piston configured to make the spool return to the neutral position through pressing the spool by means of the boom-up pilot pressure that is applied to the boom-up signal pressure port; and a drain port configured to drain the hydraulic fluid from a pressure chamber if the piston is pressed by the boom-up pilot pressure or if the spool is shifted by the boom-down pilot pressure.

The boom-up pilot pressure, which is applied to the boom-up signal pressure port, may be applied by an operation of an operation lever for operating the hydraulic cylinder.

The float valve according to the embodiment of the present invention may further includes: a spool cap installed on one side surface of the valve block and including the pressure chamber to which the hydraulic fluid from the back chamber of the holding poppet drains, the drain port, the boom-up signal pressure port, and the piston provided therein; a valve spring configured to press the spool so that the spool returns to the neutral position when the boom-down pilot pressure is released; and a retainer pin fixed to one end portion of the spool to shift the spool when being pressed by the piston that slides through applying of the boom-up pilot pressure thereto.

### ADVANTAGEOUS EFFECT

According to the embodiment of the present invention having the above-described configuration, in the case where the boom-down operation is continuously performed due to the spool stick phenomenon while the leveling and flattening work is performed through the floating function, the spool is compulsorily returned by the boom-up pilot pressure, and thus the spool stick phenomenon can be quickly eliminated.

### BRIEF DESCRIPTION OF THE DRAWINGS

The above objects, other features and advantages of the present invention will become more apparent by describing the preferred embodiments thereof with reference to the accompanying drawings, in which:
Fig. 1 is a schematic view of a float valve for a construction machine in the related art;
Fig. 2 is a hydraulic circuit diagram of the float valve illustrated in Fig. 1;
Fig. 3 is a schematic view of a float valve for a construction machine according to an embodiment of the present invention; and
Fig. 4 is a hydraulic circuit diagram of the float valve illustrated in Fig. 3.

*Explanation of reference numerals for main parts in the drawing
- 1:: first actuator port
- 2:: second actuator port
- 3:: tank port
- 4:: valve block
- 5:: holding poppet
- 6:: path
- 7:: spool
- 8:: drain port
- 9:: drain flow path
- 10:: valve spring
- 11:: boom-up signal pressure port
- 12:: piston
- 13:: pressure chamber
- 14:: drain port
- 15:: operation lever
- 16:: spool cap
- 17:: retainer pin

### DETAILED DESCRIPTION OF THE INVENTION

Hereinafter, a float valve for a construction machine according to a preferred embodiment of the present invention will be described in detail with reference to the accompanying drawings.

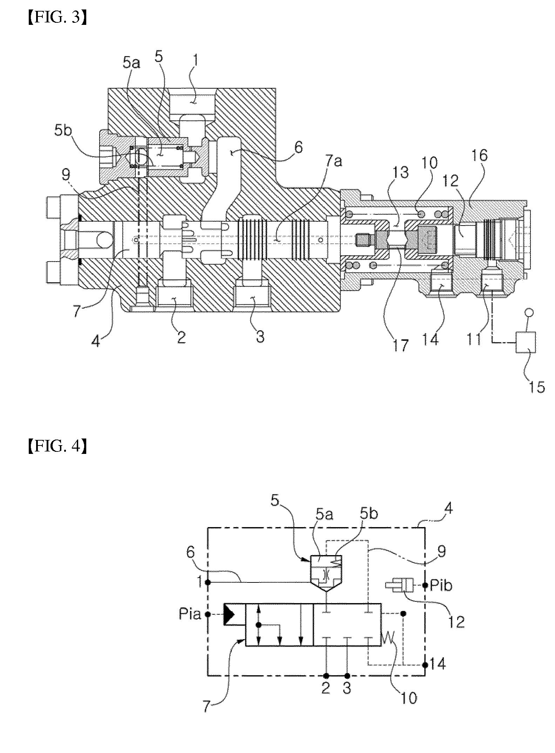

Fig. 3 is a schematic view of a float valve for a construction machine according to an embodiment of the present invention, and Fig. 4 is a hydraulic circuit diagram of the float valve illustrated in Fig. 3.

Referring to Figs. 3 and 4, a float valve for a construction machine having a lower driving structure, an upper frame mounted on the lower driving structure to swing, an engine room and a cab mounted on the upper frame, and a working device installed on the upper frame, according to an embodiment of the present invention, includes a valve block 4 including a first actuator port 1 formed therein to communicate with a large chamber of a hydraulic cylinder (i.e., boom cylinder) of the working device, a second actuator port 2 formed therein to communicate with a small chamber of the hydraulic cylinder of the working device, and a tank port 3 formed therein to selectively communicate with the first actuator port 1 and the second actuator port 2; a holding poppet 5 installed in a path 6 that connects the first actuator port 1 to the second actuator port 2 and the tank port 3 to be opened or closed; a spool 7 installed in the valve block 4 to be shifted in response to boom-down pilot pressure Pia applied thereto, the spool 7 being shifted to open the path 6 through sifting the holding poppet 5 to a holding function releasing position as hydraulic fluid drains from a back chamber 5a of the holding poppet 5, and to make the first actuator port 1 communicate with the second actuator port 2 and the tank port 3 when the path 6 is opened; a boom-up signal pressure port 11 configured to receive boom-up pilot pressure Pib applied thereto to make the spool 7 return to a neutral position if the spool 7 does not return to the neutral position when the boom-down pilot pressure Pia is released; a piston 12 configured to make the spool 7 return to the neutral position through pressing the spool 7 by means of the boom-up pilot pressure Pib that is applied to the boom-up signal pressure port 11; and a drain port 14 configured to drain the hydraulic fluid from a pressure chamber 13 if the piston 12 is pressed by the boom-up pilot pressure Pib or if the spool 7 is shifted by the boom-down pilot pressure Pib.

The boom-up pilot pressure, which is applied to the boom-up signal pressure port Pib, may be applied by an operation of an operation lever 15 for operating the hydraulic cylinder.

The float valve for a construction machine according to the embodiment of the present invention may further includes a spool cap 16 installed on one side surface of the valve block 4 and including the pressure chamber 13 to which the hydraulic fluid from the back chamber 5a of the holding poppet 5 drains, the drain port 14, the boom-up signal pressure port Pib, and the piston 12 provided therein; a valve spring 10 configured to press the spool 7 so that the spool 7 returns to the neutral position when the boom-down pilot pressure Pia is released; and a retainer pin 17 fixed to one end portion of the spool 7 to shift the spool 7 when being pressed by the piston 12 that slides through applying of the boom-up pilot pressure Pib thereto.

According to the above-described configuration, if the spool 7 is shifted in a rightward direction as shown in the drawing (in this case, the valve spring 10 is compressed) by the boom-down pilot pressure Pia that is applied during a boom-down operation, the hydraulic fluid in the back chamber 5a of the holding poppet 5 passes through the drain flow path 9 and a hollow hole 7a of the spool 7 in order, and then moves to the pressure chamber 13. The hydraulic fluid in the pressure chamber 13 drains to a hydraulic fluid tank through the drain port 14. Through this, the holding poppet 5 is shifted to the holding function releasing position to open the path 6.

In this case, the hydraulic fluid that flows from the large chamber of the hydraulic cylinder to the first actuator port 1 drains to the second actuator port 2 and the tank port 3 through the open path 6. That is, the large chamber and the small chamber of the hydraulic cylinder and the hydraulic fluid tank are made to communicate with one another, and thus it becomes possible to perform leveling and flattening work using the floating function.

On the other hand, in the case where the operation lever (RCV) is operated to be in a neutral position to release the boom-down pilot pressure Pia, the spool 7 returns to the neutral position by an elastic restoring force of the valve spring 10. As the spool 7 is shifted to the neutral position, the drain flow path 9 is intercepted, and thus the hydraulic fluid fills in the back chamber 5a of the holding poppet 5.

In this case, pressure, which is the sum of a pressure difference due to a difference in cross-sectional area between upper and lower end portions of the holding poppet 5 and an elastic force of a valve spring 5b that elastically supports the upper end portion of the holding poppet 5, becomes higher than the pressure of the hydraulic fluid that presses the lower end portion of the holding poppet 5. Through this, the path 6 is intercepted by the holding poppet 5, and thus the hydraulic fluid that flows into the first actuator port 1 is prevented from draining to the second actuator port 2 and the tank port 3. That is, the holding function that is performed by the holding poppet 5 can be maintained.

On the other hand, even in the case of releasing the boom-down pilot pressure through the operation of the operation lever, a spool stick phenomenon that the spool 7 does not return to the neutral position may occur due to an insufficient spool gap in which the spool 7 slides or foreign substances.

In this case, if the boom-up pilot pressure Pib is applied to the boom-up signal pressure port 11 through the operation of the operation lever 15, the piston 12 slides to press the retainer pin 17 that is fixed to one end of the spool 7. Accordingly, the spool 7 that is fixed to the retainer pin 17 can be shifted in a leftward direction in the drawing to return to the neutral position.

As described above, in the case where the spool 7 returns to the neutral position in order to maintain the holding function of the holding poppet after the leveling and flattening work using the floating function, the spool 7 may not return to the neutral position due to the spool stick phenomenon, and thus a boom-down phenomenon may continuously occur. In this case, however, the spool 7 is made to quickly return to the neutral position through the application of the boom-up pilot pressure Pib thereto, and thus a safety accident, such as a jack-up phenomenon of the working device that occurs due to the boom-down phenomenon, can be prevented from occurring.

Although the present invention has been described with reference to the preferred embodiment in the attached figures, it is to be understood that various equivalent modifications and variations of the embodiments can be made by a person having an ordinary skill in the art without departing from the spirit and scope of the present invention as recited in the claims.

### INDUSTRIAL APPLICABILITY

According to the present invention having the above-described configuration, in the case where the boom-down operation is continuously performed due to the spool stick phenomenon while the leveling and flattening work is performed through the floating function, the boom can be quickly returned to the neutral position by the boom-up pilot pressure.

## Claims

1. A float valve for a construction machine, comprising:
a valve block including a first actuator port formed therein to communicate with a large chamber of a hydraulic cylinder of a working device, a second actuator port formed therein to communicate with a small chamber of the hydraulic cylinder of the working device, and a tank port formed therein to selectively communicate with the first actuator port and the second actuator port;
a holding poppet installed in a path that connects the first actuator port to the second actuator port and the tank port to be opened or closed;
a spool installed in the valve block to be shifted in response to boom-down pilot pressure applied thereto, the spool being shifted to open the path through sifting the holding poppet to a holding function releasing position as hydraulic fluid drains from a back chamber of the holding poppet, and to make the first actuator port communicate with the second actuator port and the tank port when the path is opened;
a boom-up signal pressure port configured to receive boom-up pilot pressure applied thereto to make the spool return to a neutral position if the spool does not return to the neutral position when the boom-down pilot pressure is released;
a piston configured to make the spool return to the neutral position through pressing the spool by means of the boom-up pilot pressure that is applied to the boom-up signal pressure port; and
a drain port configured to drain the hydraulic fluid from a pressure chamber if the piston is pressed by the boom-up pilot pressure or if the spool is shifted by the boom-down pilot pressure.

2. The float valve according to claim 1, wherein the boom-up pilot pressure, which is applied to the boom-up signal pressure port, is applied by an operation of an operation lever for operating the hydraulic cylinder.

3. The float valve according to claim 1, further comprising:
a spool cap installed on one side surface of the valve block and including the pressure chamber to which the hydraulic fluid from the back chamber of the holding poppet drains, the drain port, the boom-up signal pressure port, and the piston provided therein;
a valve spring configured to press the spool so that the spool returns to the neutral position when the boom-down pilot pressure is released; and
a retainer pin fixed to one end portion of the spool to shift the spool when being pressed by the piston that slides through applying of the boom-up pilot pressure thereto.
